# EUROPÄISCHE PATENTANMELDUNG

(11) **EP 1 443 206 A2**
(43) Veröffentlichungstag der Anmeldung: **04.08.2004**
(21) Anmeldenummer: 03026591.2
(22) Anmeldetag: 19.11.2003
(51) Int. Cl.: F02M 37/22

(54) **Hochleistungs-Kraftstofffilter**

(30) Priorität: 31.12.2002 DE 10261690
(71) Anmelder: ROBERT BOSCH GMBH, 70442 Stuttgart (DE)
(72) Erfinder: Serrano Gil, Teresa, 28700 Madrid (ES); Garcia Benitez, Cesar, 28028 Madrid (ES)

(57) **Zusammenfassung**

Die Erfindung betrifft einen Kraftstofffilter, insbesondere einen Hochleistungs-Dieselfilter, mit einem Kraftstoffeinlass, mindestens einem Filterelement, Mitteln zum Abscheiden von Wasser aus dem Kraftstoff, mindestens einem Sumpf für abgeschiedenes Wasser sowie einem dem Sumpf zugeordneten Wasserablass und mindestens einem Kraftstoffauslass. Die Aufgabe, einen hochintegrierten Kraftstofffilter zu schaffen, der für den Einsatz in Motoren mit Einspritzsystemen, die mit Hochdruckpumpen arbeiten, geeignet ist, wird bei einem derartigen Kraftstofffilter gelöst durch ein temperaturabhängig arbeitendes Mehrwegeventil mit einen Kraftstoffzulauf für Kraftstoff, der von einem Motorteil, insbesondere von einem Einspritzsystem eines Motors, zurückgeführt wird, das den rückgeführten Kraftstoff in Abhängigkeit von seiner Temperatur auf den Kraftstofffilter und eine Bypass-Leitung verteilt.

## Beschreibung

Die Erfindung betrifft einen Kraftstofffilter, insbesondere einen Hochleistungs-Dieselfilter, mit einem Kraftstoffeinlass, mindestens einem Filterelement, Mitteln zum Abscheiden von Wasser aus dem Kraftstoff, mindestens einem Sumpf für abgeschiedenes Wasser sowie einem dem Sumpf zugeordneten Wasserablass und mindestens einem Kraftstoffauslass.

Es ist eine Vielzahl solcher Kraftstofffilter bekannt. Sie werden unter anderem in Dieselmotoren zum Herausfiltern von in Dieselkraftstoff enthaltenen Verunreinigungen und zum Abscheiden von Wasser aus dem Dieselkraftstoff eingesetzt, um hierdurch verursachte Störungen und Schäden wie beispielsweise Verunreinigungen oder Korrosion im Kraftstoffsystem oder eine schlechtere Verbrennung im Motor zu vermeiden.

Ein solcher Kraftstofffilter ist aus der DE 198 11 689 A1 bekannt. Das Gehäuse des Kraftstofffilters ist aus Vollkunststoff ausgeführt und weist ein becherförmiges Unterteil und ein deckelartiges Oberteil auf, das mittels Schnellverschluss lösbar auf dem becherförmigen Unterteil befestigt ist. Das becherartige untere Gehäuseteil nimmt einen zylindrischen Filtereinsatz auf, der auf einem Sockelabschnitt aufsitzt. Im Sockelabschnitt ist ein Sumpf für bei der Filtrierung des Kraftstoffs abgeschiedenes Wasser sowie ein über einen mit einer Verschlussschraube verschließbaren Wasserablass vorgesehen. Darüber hinaus ist am Sockelbereich ein Kraftstoffzulauf angeordnet, der in einen Zuströmkanal für eine unterhalb des Sockelabschnitts angeschraubte Heizeinrichtung mündet. Auch ist im Sockelabschnitt ein Abströmkanal vorgesehen, durch den der Kraftstoff von der Heizeinrichtung auf die Schmutzseite des Filters gelangt. Der Filtereinsatz wird radial von außen nach innen durchströmt. Seine Reinseite steht in Verbindung mit einem Ablaufstutzen, über den der gereinigte Kraftstoff über einen ersten Kanal in Richtung zum Motor abgeführt werden kann. Darüber hinaus ist im Ablaufstutzen ein zweiter Kanal vorgesehen, der über ein Überströmventil verschließbar und über den eine Kraftstoffrückführung in den Tank möglich ist. Die Reinseite des Filters steht auch mit dem Sumpf in Verbindung.

In modernen Dieselmotoren werden Hochdruck-Einspritzsysteme verwendet, die den Kraftstoff nicht nur in die Brennräume des Motors einspritzen, sondern einen Teil des Kraftstoffs zu ihrer eigenen Kühlung und Schmierung verwenden. Der hierfür benötigte Kraftstoffdurchsatz ist um ein Vielfaches größer als der lediglich für den Antrieb des Motors benötigte. Hieraus resultiert zum einen das Problem, dass ein Teil des Kraftstoffs von der Hochdruckpumpe wieder zurückgeführt werden muss. Ein anderes Problem besteht darin, dass die Temperatur des rückzuführenden Kraftstoffs je nach Betriebsart des Motors vergleichsweise hoch ist, so dass sich der im Kraftstoffsystem zirkulierende Kraftstoff immer weiter aufheizt, wenn nicht eine entsprechende Kraftstoffkühlung vorgesehen ist.

Somit besteht die Aufgabe der vorliegenden Erfindung darin, einen hochintegrierten Kraftstofffilter zu schaffen, der für den Einsatz in Motoren mit Einspritzsystemen, die mit Hochdruckpumpen arbeiten, geeignet ist.

Diese Aufgabe wird bei einem Kraftstofffilter der eingangs genannten Art gelöst durch eine temperaturabhängig arbeitende Durchströmregelungseinrichtung mit einen Kraftstoffzulauf für Kraftstoff, der von einem Motorteil, insbesondere von einem Einspritzsystem eines Motors, zurückgeführt wird, das den rückgeführten Kraftstoff in Abhängigkeit von seiner Temperatur auf den Kraftstofffilter und eine Bypass-Leitung verteilt.

Die Durchströmregelungseinrichtung kann in einer einfachen Ausführungsform aus zwei parallel geschalteten Ventilen bestehen, die die Durchflussmenge des rückgeführten Kraftstoffs in den Kraftstofffilter bzw. in die Bypass-Leitung regeln.

Der erfindungsgemäße Kraftstofffilter ist in zweierlei Hinsicht besonders für den Einsatz in Dieselmotoren mit Hochdruck-Einspritzsystemen geeignet. Durch die Durchströmregelungseinrichtung ist es zum einen möglich, den rückgeführten Kraftstoff solange über den Kraftstofffilter direkt wieder dem Motor zuzuführen, solange die Temperatur des rückgeführten Kraftstoffs hierzu geeignet erscheint. Je nach Höhe der Temperatur des rückgeführten Kraftstoffs kann dabei die Menge des den Kraftstofffilter erneut durchlaufenden Kraftstoffs dosiert werden, wobei der restliche Teil des rückgeführten Kraftstoffs am Kraftstofffilter vorbei über eine Bypass-Leitung, beispielsweise zurück in den Tank oder in eine Kühleinheit gefördert wird, wo der Kraftstoff abgekühlt und von wo aus er erneut dem Kraftstofffilter zugeführt werden kann. Die Besonderheit der Verwendung einer temperaturabhängig arbeitenden Durchströmregelungseinrichtung liegt insbesondere darin, dass der rückgeführte Kraftstoff nur bei Bedarf zur Kühlung am Kraftstofffilter vorbeigeführt wird. Hierdurch wird ein optimaler Kraftstoffkreislauf ermöglicht.

Dementsprechend ist es von besonderem Vorteil, wenn die Durchströmregelungseinrichtung den rückgeführten Kraftstoff vollständig der Bypass-Leitung zuführt, wenn er eine vorbestimmte obere Temperatur überschreitet. Ebenso ist es von besonderem Vorteil, wenn die Durchströmregelungseinrichtung den rückgeführten Kraftstoff vollständig dem Kraftstofffilter zuführt, solange er eine vorbestimmte untere Temperatur nicht überschreitet.

In einer besonderen Ausführungsform der Erfindung wird als Durchströmregelungseinrichtung ein Mehrwegeventil, insbesondere ein Dreiwege-Wachsregler verwendet. Unter Wachsregler wird hier und im folgenden ein als Stromteiler arbeitendes Mehrwegeventil mit einem den Durchfluss steuernden, als Dehnstoffthermostaten ausgeführten Innenthermostaten verstanden. Der besondere Vorteil von Wachsreglern gegenüber herkömmlichen Thermostaten besteht darin, dass er besonders robust und unempfindlich gegenüber Vibrationen ist, da keine vibrationsempfindliche Kapillarrohrverbindungen zwischen Thermostat und Regelventil notwendig sind.

In einer weiteren bevorzugten Ausgestaltung weist der erfindungsgemäße Kraftstofffilter eine Heizvorrichtung zum Aufwärmen des über den Kraftstoffeinlass einströmenden Kraftstoffs auf. Dies ist insbesondere dann von Vorteil, wenn der Motor gerade erst gestartet wurde und das gesamte Kraftstoffsystem noch kalt ist. Mit der Erwärmung des Kraftstoffs in der Heizeinrichtung wird sicher vermieden, dass aufgrund zu geringer Kraftstofftemperaturen Wachspartikel ausflocken, die die Filtereinsätze zusetzen und somit unbrauchbar machen können.

In einer besonders hoch integrierten und insofern bevorzugten Ausführung des erfindungsgemäßen Kraftstofffilters ist eine Kühleinrichtung zum Abkühlen des vom Mehrwegeventil der Bypass-Leitung zugeführten Kraftstoffs vorgesehen. Diese Ausführung wird durch einen mit dem Kühlwassersystem des Motors verbundenen, die Kühleinrichtung durchlaufenden Wasserkanal vorteilhaft weitergebildet. Hierdurch kann auf zusätzliche Kühlmittel wie beispielsweise Peltier-Elemente verzichtet werden.

Werden im Kraftstofffilter zwei Filtereinsätze nebeneinander angeordnet, kann die Durchflussleistung des Kraftstofffilters wesentlich erhöht werden.

Bevorzugt weist der erfindungsgemäße Kraftstofffilter zwei oder Kraftstoffauslassanschlussstücke, so dass beispielsweise mehrere Hochdruckpumpen eines Einspritzsystems parallel mit Kraftstoff versorgt werden können. Dementsprechend ist es ebenso von Vorteil, wenn zwei oder mehr Kraftstoffzulaufanschlüsse zum Mehrwegeventil vorgesehen sind, so dass beispielsweise ein paralleler Kraftstoffrücklauf von zwei oder mehreren Hochdruckpumpen möglich ist.

Es ist auch möglich, das die Durchströmregelungseinrichtung den rückgeführten Kraftstoff in Abhängigkeit von der Temperatur des im Kraftstofffilter enthaltenen Kraftstoffs verteilt.

Im folgenden wird die Erfindung anhand von Figuren, die ein bevorzugtes Ausführungsbeispiel zeigen, näher erläutert.

Es zeigen
- Figur 1: einen Querschnitt eines erfindungsgemäßen Ausführungsbeispiels,
- Figur 2: eine Isometrie des in Figur 1 dargestellten Ausführungsbeispiels,
- Figur 3: eine Aufsicht des in Figur 1 dargestellten Ausführungsbeispiels,
- Figur 4: eine dreidimensionale Darstellung des Heizelements des in Figur 1 dargestellten Ausführungsbeispiels.

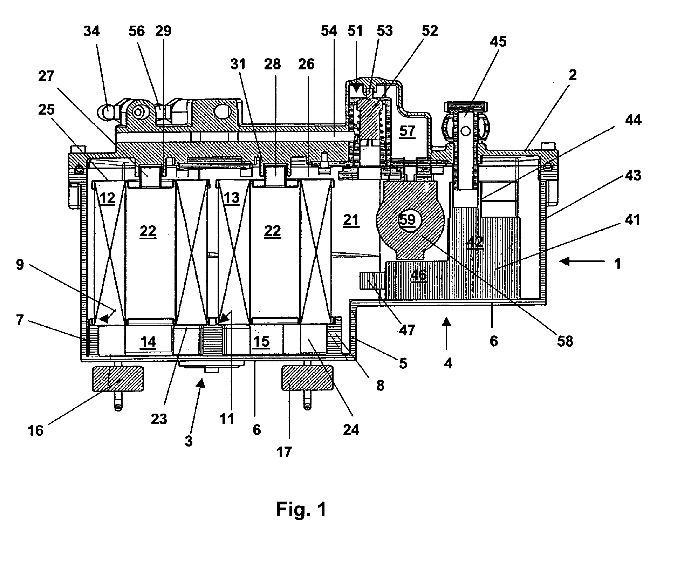

Der in den Figuren 1 bis 3 dargestellte Kraftstofffilter weist einen unteren, nach oben hin offenen Gehäuseteil **1** mit einer länglichen, nahezu rechteckigen Grundfläche auf. Auf das untere Gehäuseteil **1** ist ein im wesentlichen ebener Gehäusedeckel **2** aufgeschraubt.

Wie sich insbesondere aus Figur 1 entnehmen lässt, weist der Kraftstofffilter einen tieferen Bereich **3** und einen flacheren Bereich **4** auf, die durch einen Versprung **5** im Boden **6** des Gehäuseteils **1** definiert werden, der parallel zu den schmalen Seitenkanten des Gehäuseunterteils **1** in etwa in der Mitte des Gehäuseunterteils **1** verläuft. Am Boden **6** des tieferen Bereichs **3** sind zwei aneinander anliegende, kreisrunde Stege **7, 8** vorgesehen, an denen umlaufende Schulterflächen **9, 11** ausgebildet sind, auf denen jeweils ein Filtereinsatz **12, 13** aufsitzt. Die von den Filtereinsätzen **12, 13** und den Stegen **7, 8** eingeschlossene Räume **14, 15**, die untereinander verbunden sind (nicht dargestellt), dienen als Sumpf für an der Innenseite der Filtereinsätze abgeschiedenes Wasser. Am Boden der Räume **14, 15** ist jeweils ein Wasserablass mit einer Ablassschraube **16, 17** vorgesehen, die einen Wassersensor trägt, über dessen Signalanschluss **18, 19** ein Kontrollsignal abgegeben wird, wenn der Sumpf geleert werden muss.

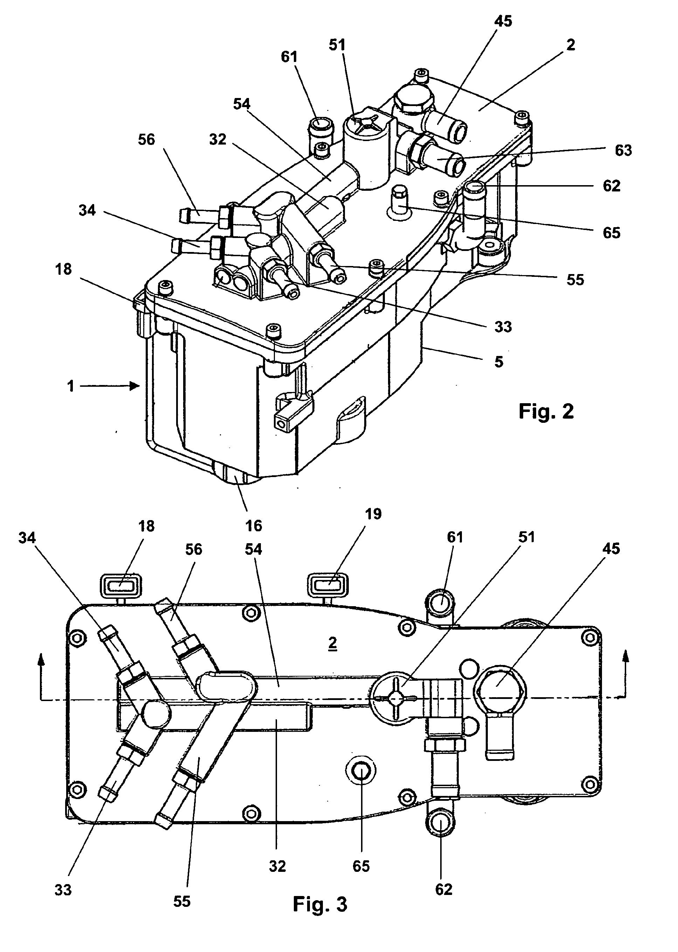

Durch die Filtereinsätze **12, 13** wird der freie Raum innerhalb des Kraftstofffilters in eine Schmutzseite **21** außerhalb der Filtereinsätze **12, 13** und einer Reinseite **22** als dem von den Filtereinsätzen **12, 13** eingeschlossenen Raum unterteilt, zu dem auch der aus den Räumen **14, 15** gebildete Sumpf zählt. Hierzu weisen die Filtereinsätze **12, 13** eine untere Abdeckplatte **23, 24** auf, mit der die Schmutzseite **14** gegenüber der Reinseite **15** und insbesondere gegenüber den von den Stegen **7, 8** und den Filtereinsätzen **12, 13** eingeschlossenen Raum dicht abgetrennt wird. Zum gleichen Zweck weisen die Filtereinsätze **12, 13** jeweils eine obere Abdeckplatte **25, 26** auf, die die Filtereinsätze **12, 13** vollständig abdecken, wobei sie jeweils einen Anschlussstutzen **27**, **28** aufweisen, die über entsprechenden Anschlussgegenstücke **29, 31** an der Unterseite des Gehäusedeckels **2** mit einem an der Oberseite des Gehäusedeckels **2** ausgebildeten, in den Figuren 2 und 3 dargestellten Auslasskanal **32** in Verbindung stehen. Der Auslasskanal **32** erstreckt sich zu einer Seite der Längsachse des Gehäusedeckels **2** oberhalb des tieferen Bereichs **3** des Kraftstofffilters. An seinem der Seitenkante des Kraftstofffilters zugewandten Ende sind zwei Anschlussstutzen **33, 34** vorgesehen, über die der gereinigte Kraftstoff beispielsweise einer Hochdruckpumpe eines Einspritzsystems zugeführt werden kann.

Im Bereich des Versprungs **5** wird der Kraftstofffilter in Richtung zum flacheren Bereich **4** des Gehäuseunterteils **1** hin allmählich etwas schmaler.

Im flacheren Bereich **4** des Kraftstofffilters ist eine Heizkammer **41** mit einem im wesentlichen L-förmigen Querschnitt eingesetzt. Der hohe Teil **42** der Heizkammer **41** ist der schmalen Seitenwand **43** des unteren Gehäuseteils **1** zugewandt. An der Oberseite des hohen Teils **42** ist ein Anschlussstutzen **44** vorgesehen, der mit einem durch den Gehäusedeckel **2** hindurch geführten, L-förmigen Anschlussstück **45**, das als Kraftstoffeinlass des Kraftstofffilters dient, zusammenwirkt. Innerhalb der Heizkammer **41** sind in üblicher Form elektrische Heizelemente vorgesehen, auf die hier nicht weiter eingegangen wird. Die Heizkammer **41** sitzt vollständig auf dem Boden **6** im flacheren Teil **4** des Kraftstofffilters auf. Sein flaches Schenkelteil **46** weist in Richtung zum tieferen Teil **3** des Kraftstofffilters. An der Stirnseite des Schenkelteils **46** ist ein Heizkammerauslassstutzen **47** ausgebildet, aus dem der Kraftstoff im Bereich oberhalb des Versprungs **5** in die Schmutzseite **21** des Kraftstofffilters strömt.

Oberhalb des Heizkammerauslassstutzens **47** ist im Gehäusedeckel **2** ein als Wachsregler ausgebildetes, temperaturabhängig arbeitendes Dreiwegeventil **51** angeordnet. Das Dreiwegeventil **51** arbeitet mit einem Ventilkolben **52**, der auf einem festsitzenden Ventilstift **53** beweglich ist und entgegen einer Federkraft von einem nicht dargestellten Dehnstoffthermostaten bewegt wird, der sich proportional zur Temperatur des ihn umgebenden Kraftstoffs ausdehnt. Das Dreiwegeventil **51** ist auf seiner Zulaufseite mit einem an der Oberseite des Gehäusedeckels ausgebildeten, im wesentlichen parallel zum Auslasskanal **32** geführten Rückführkanal **54** verbunden, an dessen dem Dreiwegeventil **51** abgewandten Ende zwei Anschlussstücke **55, 56** angeordnet sind, über die der Kraftstofffilter beispielsweise mit einem Kraftstoffrücklauf von einer Hochdruckpumpe eines Einspritzsystems verbunden werden kann.

Unterhalb des Kolbens **52** öffnet sich das Dreiwegeventil **51** in den Schmutzraum **21** des Kraftstofffilters im Bereich oberhalb des Versprungs **5**. Oberhalb des Kolbens **52** öffnet sich das Dreiwegeventil **51** in eine Vorkammer **57** für eine Kühleinheit **58.** Die Kühleinheit **58** erstreckt sich oberhalb des flachen Schenkelteils bder Heizkammer **41** quer zur Längsrichtung des Kraftstofffilters. Sie wird von einer Kühlwasserleitung **59** durchzogen, die durch die Seitenwände des Kraftstofffilters hindurchgeführt ist und über die Anschlussstücke **61, 62** beispielsweise mit dem Kühlwassersystem des Motors verbunden werden kann. Die Vorkammer **57** ist über einen nicht dargestellten Durchfluss mit einem die Kühlwasserleitung **59** umschließenden Raum der Kühleinheit **58** verbunden. Dieser ist über ein Anschlussstück **63** mit einer beispielsweise als Kraftstoffrückführung zum Tank ausgebildete Bypass-Leitung, verbunden.

Zur besseren Leitungszuordnung und einfacheren Montage im Motorraum sind das Anschlussstück **45** für den Kraftstoffeinlass und das Anschlussstück **63** für die Bypass-Leitung, die beide vorzugsweise mit dem Tank verbunden sind, paarweise nebeneinander angeordnet, ebenso wie jeweils ein Anschlussstutzen **33** bzw. **34** und ein Anschlussstück **55, 56** für rückgeführten Kraftstoff, die vorzugsweise jeweils mit einer Kraftstoffzu- und -ableitung für jeweils eine Hochdruckpumpe eines Einspritzsystems verbunden sind.

Am Deckel ist ein mit einer Schraube verschlossener Absaugstutzen **65** mit einem nicht dargestellten Saugrohr angeordnet, der bis in den Bodenbereich des tieferen Bereichs **4** des Kraftstofffilters außerhalb der kreiszylindrischen Stege **7, 8** hinabreicht. Hierüber kann im gegebenen Fall Wasser, dass sich am Boden der Schmutzseite **21** des Kraftstofffilters angesammelt haben sollte, abgesaugt werden.

Der vom Tank kommende Kraftstoff wird über das Anschlussstück **45** der Heizkammer **41** zugeführt, in der er erwärmt wird. Er verlässt die Heizkammer **41** über den Heizkammerauslassstutzen **47** und durchströmt dann die Filtereinsätze **12, 13** radial von der äußeren Schmutzseite **21** auf die innere Reinseite **22** des Filtereinsatzes. Die Filtereinsätze **12, 13** sind auf ihrer Innenseite derart beschichtet, dass daran Wasser koaguliert und somit in Tropfen aus dem Kraftstoff abgeschieden wird. Aufgrund der höheren spezifischen Dichte sinken die Wassertropfen ab und sammeln sich im durch die Räume **14** und **15** gebildeten Sumpf. Der gefilterte Kraftstoff wird über die Anschlussstutzen **27, 28,** den Auslasskanal **32** und die Anschlussstücke **33, 34** dem Motor, insbesondere der Hochdruckpumpe bzw. den Hochdruckpumpen eines Einspritzsystems zugeführt.

Zur gleichen Zeit wird Kraftstoff aus dem Motor, insbesondere von der bzw. den Hochdruckpumpen eines Einspritzsystems, zum Kraftstofffilter zurückgeführt. Der rückgeführte Kraftstoff wird über die Anschlussstücke **55, 56** und dem Rückführkanal **54** dem Dreiwegeventil **51** zugeführt. Je nach Temperatur des rückgeführten Kraftstoffs verteilt das Dreiwegeventil **51** den Kraftstoffstrom auf die Vorkammer **57** für die einer Bypass-Leitung vorgeschalteten Kühleinheit **58** und auf die Schmutzseite **21.** In einer Anwendung hat sich als geeignete Regelung herausgestellt, wenn der rückgeführte Kraftstoff bei einer Temperatur von bis zu 15° C vollständig der Schmutzseite **21** des Kraftstofffilters zugeführt wird, bei einer Temperatur von über 25° C vollständig der Bypass-Leitung zugeführt wird, und im Bereich von 15°C bis 25°C im wesentlichen linear proportional auf die Schmutzseite **21** des Kraftstofffilters und die Bypass-Leitung verteilt wird. Der Hub des Kolbens beträgt bei einer bevorzugten Ausführungsform in diesem Temperaturbereich 5 mm. Er kann bei dieser Ausführungsform bis zu 12 mm bei einer Kraftstofftemperatur von 120° C betragen.

Der vom Dreiwegeventil **51** der Schmutzseite **21** zugeführte Kraftstoff vermischt sich im Bereich oberhalb des Versprungs **5** mit dem aus der Heizkammer **41** austretenden Kraftstoff, so dass hierüber je nach Temperaturdifferenz eine Erwärmung bzw. Abkühlung des aus der Heizkammer **41** austretenden Kraftstoffs erfolgt.

Der über das Dreiwegeventil **51** der Bypass-Leitung zugeführte Kraftstoff durchströmt die Vorkammer **57** und die Kühleinheit **58**, in der er von dem durch die Kühlwasserleitung **59** fließenden Kühlwasser abgekühlt wird.

## Patentansprüche

1. Kraftstofffilter, insbesondere Hochleistungs-Dieselfilter, mit einem Kraftstoffeinlass (45), mindestens einem Filterelement (12, 13), Mitteln zum Abscheiden von Wasser aus dem Kraftstoff, mindestens einem Sumpf (14, 15) für abgeschiedenes Wasser sowie einem dem Sumpf (14, 15) zugeordneten Wasserablass und mindestens einem Kraftstoffauslass (33, 34), **gekennzeichnet durch** eine temperaturabhängig arbeitende Durchströmregelungseinrichtung mit einen Kraftstoffzulauf (54, 55, 56) für Kraftstoff, der von einem Motorteil, insbesondere von einem Einspritzsystem eines Motors, zurückgeführt wird, die den rückgeführten Kraftstoff in Abhängigkeit von seiner Temperatur auf den Kraftstofffilter und eine Bypass-Leitung verteilt.

2. Kraftstofffilter nach Anspruch 1, **dadurch gekennzeichnet, dass** die Durchströmregelungseinrichtung den rückgeführten Kraftstoff vollständig der Bypass-Leitung zuführt, wenn er eine vorbestimmte obere Temperatur überschreitet.

3. Kraftstofffilter nach Anspruch 1 oder 2, **dadurch gekennzeichnet, dass** die Durchströmregelungseinrichtung den rückgeführten Kraftstoff vollständig dem Kraftstofffilter zuführt, solange er eine vorbestimmte untere Temperatur nicht überschreitet.

4. Kraftstofffilter nach einem der Ansprüche 1 bis 3, **dadurch gekennzeichnet, dass** als Durchströmregelungseinrichtung ein Mehrwegeventil (51), insbesondere ein Dreiwege-Wachsregler verwendet wird.

5. Kraftstofffilter nach einem der Ansprüche 1 bis 4, **gekennzeichnet durch** eine Heizvorrichtung (41, 42, 44, 46) zum Aufwärmen des über den Kraftstoffeinlass (45) einströmenden Kraftstoffs.

6. Kraftstofffilter nach einem der Ansprüche 1 bis 5, **gekennzeichnet durch** eine Kühleinrichtung (58) zum Abkühlen des vom Mehrwegeventil (51) der Bypass-Leitung zugeführten Kraftstoffs.

7. Kraftstofffilter nach Anspruch 6, **gekennzeichnet durch** einen mit dem Kühlwassersystem des Motors verbundenen, die Kühleinrichtung (58) durchlaufenden Wasserkanal (59).

8. Kraftstofffilter nach einem der Ansprüche 1 bis 7, **gekennzeichnet durch** zwei nebeneinander angeordnete Filtereinsätze (12, 13).

9. Kraftstofffilter nach einem der Ansprüche 1 bis 8, **gekennzeichnet durch** zwei oder mehr Kraftstoffauslassanschlussstücke (33, 34).

10. Kraftstofffilter nach einem der Ansprüche 1 bis 9, **gekennzeichnet durch** zwei oder mehr Kraftstoffzulaufanschlüsse (55, 56) zum Mehrwegeventil (51).
